# EUROPEAN PATENT APPLICATION

(11) **EP 2 450 565 A1**
(43) Date of publication of application: **09.05.2012**
(21) Application number: 10190335.9
(22) Date of filing: 08.11.2010
(51) Int. Cl.: F03D 7/02, F03D 9/02, F03D 11/00

(54) **Wind turbine and method of control of a wind turbine**

(71) Applicant: SIEMENS AKTIENGESELLSCHAFT, 80333 München (DE)
(72) Inventor: Benitez Sanchez, Ana Maria, 52353 Düren (DE); Wohlleb, Matthias, 52064 Aachen (DE); Li, Ying, 52070 Aachen (DE); Ventzke, Klaus, 52379 Langerwehe (DE); Schneider, Peter, 52379 Langerwehe (DE)

(57) **Abstract**

The present invention concerns a wind turbine comprising a rotor (4) and a main shaft (6), wherein the main shaft (6) is coupled to the rotor (4) to transforming wind energy into kinetic energy of rotation of the main shaft (6), and wherein the main shaft (6) is mechanically coupled to a main generator (8) of the wind turbine (2), wherein the main generator (8) is realised to transform kinetic energy of rotation into electrical energy. The invention is characterized by a brake system comprising an energy recovery arrangement realised to recover at least part of the kinetic energy of the rotation of the main shaft (6) when the rotational speed of the rotor (4) is reduced by the brake system.

## Description

The present invention concerns a wind turbine comprising a rotor and a main shaft, wherein the main shaft is coupled to the rotor to transforming wind energy into kinetic energy of rotation of the main shaft, and wherein the main shaft is mechanically coupled to a main generator of the wind turbine, wherein the main generator is realised to transform kinetic energy of rotation into electrical energy. It also concerns a method for controlling a wind turbine.

Wind turbines for transforming wind energy into electric energy are well known. The intensity and continuity of wind energy varies from place to place and from time to time resulting in fluctuating energy supply to a wind turbine. Furthermore, a wind turbine must be shut down in case of a long turbulence resulting in a 100% loss of wind energy or less electric energy can be provided on less windy days. To this end, a wind turbine comprises a conventional brake to brake the rotor. The braking energy is effectively wasted.

It is the object of the invention to provide a wind turbine with improved energy efficiency.

This object of the invention is solved by a wind turbine according to claim 1 and a method for controlling a wind turbine according to claim 15.

Accordingly, the wind turbine comprising a rotor and a main shaft, wherein the main shaft is coupled to the rotor to transforming wind energy into kinetic energy of rotation of the main shaft, and wherein the main shaft is mechanically coupled to a main generator of the wind turbine, wherein the main generator is realised to transform kinetic energy of rotation into electrical energy, characterized by a brake system comprising an energy recovery arrangement realised to recover at least part of the kinetic energy of the rotation of the main shaft when the rotational speed of the rotor is reduced by the brake system. This allows storing kinetic energy while the wind turbine is running a braking manoeuvre and to use the stored energy after the braking manoeuvre is finished.

According to the invention a method of controlling a wind turbine comprising a rotor and a main shaft, wherein the main shaft is coupled to the rotor to transform wind energy into kinetic energy of rotation of the main shaft, and wherein the main shaft is mechanically coupled to a main generator of the wind turbine, wherein the main generator is realised to transform kinetic energy of rotation into electrical energy, whereby the method comprises the step of storing at least part of the kinetic energy which is recovered when the rotational speed of the rotor is reduced by the brake system.

Particularly advantageous embodiments and features of the invention are given by the dependent claims, as revealed in the following description. Thereby, features revealed in the context of the wind turbine may also be realized in the context of the context of the method for control a wind turbine.

In a preferred embodiment, the brake system comprises a kinetic energy storage device for storing kinetic energy of rotation of the main shaft while braking the rotor. The kinetic energy storage device allows kinetic energy to be stored while the wind turbine is running a braking manoeuvre rapidly and conveniently. The kinetic energy could be transformed into electrical energy and then stored. Later, the stored electrical energy could be supplied to other electrical devices of the wind turbine or to an electrical grid to which the main generator is connected. The kinetic energy storage device acts as a brake while running a braking manoeuvre. Therefore the wind turbine could be equipped with a smaller brake for securing a stationary rotor than a conventional brake, e.g. a securing brake for securing the rotor. Finally, a smaller conventional brake could be combined with the kinetic energy storage device to collectively break the rotor. Compared with a wind turbine according to the state of the art such a smaller conventional brake results in a light wind turbine requiring a smaller nacelle.

In a preferred embodiment, the kinetic energy storage device further comprises at least one flywheel mechanically coupled to the shaft. The kinetic energy is transferred form the shaft to the flywheel. The flywheel stored the kinetic energy by its rotational movement. Such flywheels can store a huge amount of kinetic energy in a short time. For example, four flywheels can be arranged in a quadruple arrangement to avoid undesired dynamic effects.

In a further preferred embodiment an ancillary generator is mechanically coupled with the flywheel. This makes it possible to transform the stored kinetic energy in the flywheel into electrical energy which could later be used for supplying other electrical devices of the wind turbine. Alternatively, this electrical energy could be supplied to the electrical grid to which the main generator is connected. Furthermore, with the ancillary generator, it is possible to dispense the stored electrical energy over a longer period of time than the time taken to transfer the kinetic energy from the main shaft to the flywheel during a braking manoeuvre. That makes it possible to use the stored energy over a longer time period at a lower rate than the rate at which it was stored.

Preferably, an electrical energy storing device is electrically coupled with the ancillary generator. This allows storage of electrical energy produced by the ancillary generator derived form the kinetic energy stored by the flywheels. This electrical energy could be used to drive the electrical devices of the wind turbine or could be supplied to the electrical grid to which the main generator is connected.

In a further embodiment, an AC/DC converter is provided for converting electrical energy generated by said ancillary generator. This allows convenient storage of electrical energy in storage devices such as batteries, accumulators etc..

In a preferred embodiment, an ancillary gear with an input shaft and an output shaft is provided, whereby the input shaft is mechanically coupled to the main shaft. For example, such a mechanical coupling could comprise a direct coupling without any intermediate gear. The ancillary gear allows, by transferring the rotational speed of the main shaft to the output shaft to improve the transmission of kinetic energy to the flywheel. Thereby, a transmission ratio of at least 1 can be archived.

Preferably, the ancillary gear comprises a gearbox with a continuously variable transmission (CVT) ratio between the input shaft and said output shaft. The ancillary gear allows a stepless adaption of the transmission ratio and therefore an improved transmission of kinetic energy from the main shaft to the flywheel.

Such a CVT gear comprises two V-belt pulleys that are split perpendicular to their axes of rotation, with a V-belt running between them. The gear ratio is changed by moving the two sections of one pulley closer together and the two sections of the other pulley further apart. The V-shaped cross section of the belt causes the belt to ride higher on one pulley and lower on the other. This effectively changes the diameters of the pulleys, which in turn changes the overall gear ratio. The distance between the pulleys does not change, and neither does the length of the belt, so changing the gear ratio means both pulleys must be adjusted simultaneously (one is made bigger, the other is made smaller) in order to maintain a desired tension on the belt.

In a preferred embodiment, a clutch for mechanical coupling and decoupling the kinetic energy storing device from the main shaft is provided. This allows, for example, disengaging the ancillary gear from the main shaft. This will enhance the life time of the ancillary gear, since, decoupled from the main shaft the ancillary gear is not forced to rotate.

In a preferred embodiment the main shaft is directly mechanically coupled to the main generator. That means that the wind turbine is of the direct drive type without a gear transforming the rotational speed of main shaft to another, higher value.

Preferably, the kinetic energy storage device is directly mechanically coupled to the main shaft. In such an arrangement no gear is required between the kinetic energy storage device and the main shaft.

In another embodiment, a gear with an input shaft and an output shaft is provided, whereby the input shaft is directly mechanically coupled with the main shaft and the output shaft is directly mechanically coupled with the main generator. This gear allows the efficiency of the generator to be improved by providing an optimized rotational speed.

Preferably, the kinetic energy storage device is directly mechanically coupled with the output shaft of the gear. Accordingly, the transmission ratio of the ancillary gear could be reduced since the gear provides a higher rotational speed at its output shaft than at its input shaft.

Other objects and features of the present invention will be become apparent from the following detailed description considered in conjunction with the accompanying drawings. It is to be understood, however, that the drawings are designed solely for the purpose of illustration and not as definition of the limits of the invention.

In the drawings, like reference numbers refer to like objects throughout. Objects in the diagrams are not necessarily drawn to scale.

Examples of the invention will now be described with reference to the following drawings:
Fig. 1 shows a cross-section of a wind turbine according to a first embodiment of the invention,
Fig. 2 shows a cross-section of a wind turbine according to a second embodiment of the invention,
Fig. 3 shows a cross-section of a wind turbine according to a third embodiment of the invention, and
Fig. 4 shows a cross-section of a wind turbine according to a forth embodiment of the invention, and
Fig. 5 shows a cross-section of a wind turbine according to a fifth embodiment of the invention.

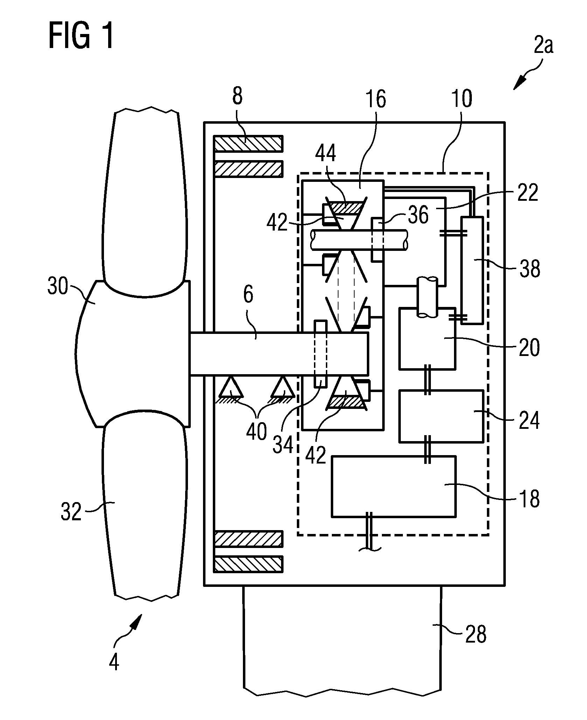

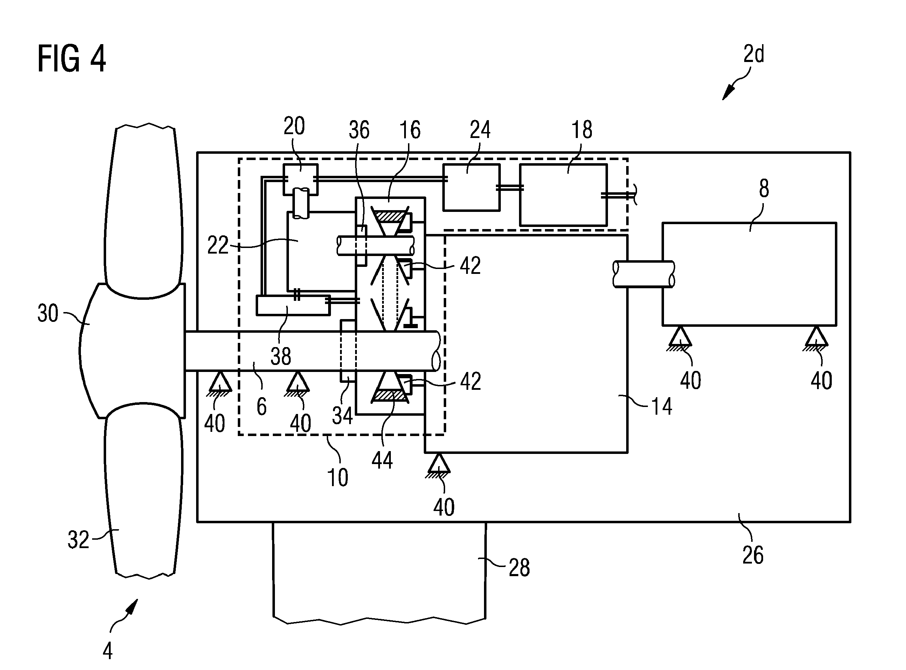

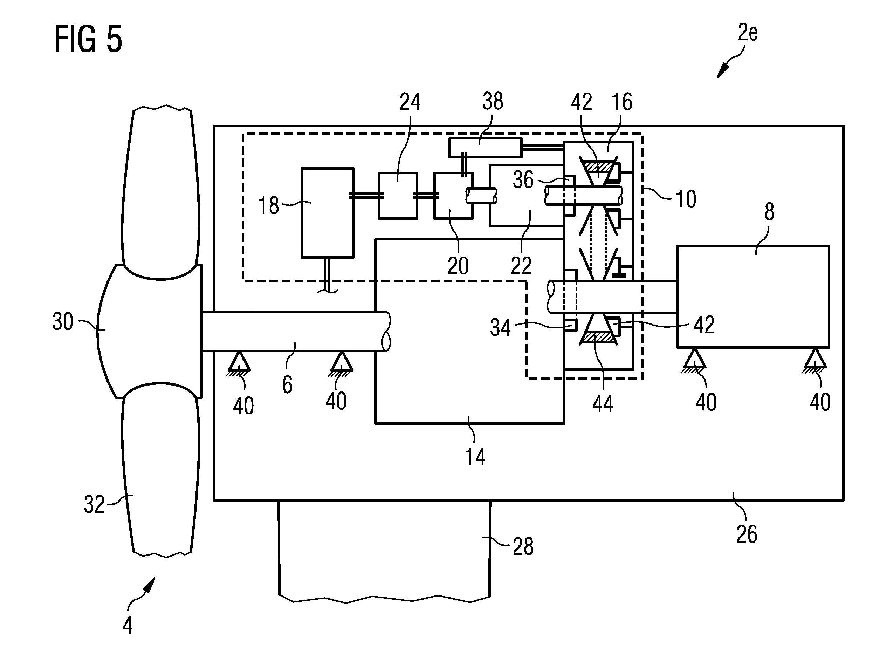

### Reference is made to the Fig. 1 to 5.

A wind turbine 2a, 2b, 2c, 2d, 2e comprises a nacelle 26 mounted on a tower 28. In the nacelle 26 is housed a generator 8 for converting mechanical energy into electrical energy. The generator 8 comprises a main shaft 6 extending out of the nacelle 26. At the outside end of the main shaft 6 a rotatable rotor 4 is rigidly fixed, comprising a hub 30 with blades 32 for transforming wind energy into a rotation of the main shaft 6, which in turn drives the generator 8 to produce electric energy.

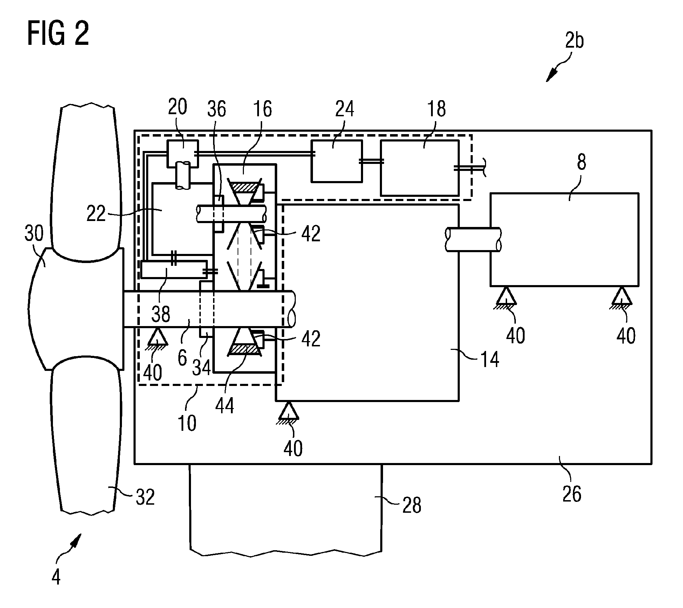

The wind turbine 2a according to Fig. 1 comprises a direct drive, in which the main shaft 6 is directly mechanically coupled with the generator 8. In contrast thereto the wind turbines 2b, 2c, 2d, 2e according to Fig. 2 - 5 comprise a gear 14 mechanically coupling the shaft 6 to the generator 8 for transforming the rate of revolution of the main shaft 6 to another rate of revolution, to improve the efficiency of the generator 8. Here, the main shaft 8 serves as input shaft of the gear 14, whereby the output shaft of the gear 14 is mechanically coupled to the generator 8.

The wind turbine 2d has three bearings 40 supporting the main shaft 6 and the main generator 8. In contrast thereto the wind turbines 2b and 2c and 2e have four bearings 40, whereby two bearings 34 support the main shaft 6 and two bearings 40 support the main generator 8.

The wind turbines 2a, 2b, 2c, 2d, 2e comprises a brake system for braking the rotor 4, for example when the wind strength is too high. The brake system comprises an energy recovery arrangement for storing at least part of the kinetic energy which is generated or released when the rotational speed of the rotor 4 is reduced by the brake system. The brake system comprises a kinetic energy storage device 10 for storing the recovered kinetic energy of rotation of the main shaft 6. This stored kinetic energy will be transformed into electrical energy and can be used later.

The kinetic energy storage device 10 comprises, as its main parts, an ancillary gear 16, at least one flywheel 22, an ancillary generator 20, an AC/DC converter 24, a controller 38 and a battery 18. The ancillary gear 16 is a gearbox with an input shaft and an output shaft. The ancillary gear 16 is a continuously variable transmission ratio (CVT) gear allowing continuously variable transmission ratios between the input shaft and the output shaft.

A CVT gear comprises two V-belt pulleys 42 that are split perpendicularly to their axes of rotation, with a V-belt 44 running between them. The gear ratio is adjusted by moving the two sections of one pulley 42 closer together and the two sections of the other pulley 42 further apart. Due to the V-shaped cross section of the belt 44, this causes the belt 44 to ride higher on one pulley 42 and lower on the other. Doing this changes the effective diameters of the pulleys 42, which in turn changes the overall gear ratio. The distance between the pulleys 42 does not change, and neither does the length of the belt 44, so changing the gear ratio means both pulleys must be simultaneously adjusted (one bigger, the other smaller) in order to maintain a required amount of tension on the belt. The ancillary gear 16 comprises further a first speed sensor 34 measuring the rotational speed of the input shaft of the ancillary gear 16. Furthermore, the ancillary gear 16 comprises a second rotational speed sensor 36 measuring the rotational speed of the output shaft of the ancillary gear 16.

The controller 38 is connected to the first speed sensor 34 and the second speed sensor 36 for transferring the measurement values measured with the first and second speed sensor 34, 36 to the controller 38. Further, the controller 38 is connected with the ancillary gear 16. On the basis of the measured values the controller 38 regulates the transmission ratio for optimizing the energy transfer from the main shaft 6 to the flywheels 22. When the wind strength is too high, for example, the controller 38 starts a braking manoeuvre. Therefore, the controller 38 amends the transmission ratio of the ancillary gear 16 to initiate an energy transfer from the main shaft 6 to the flywheels 22.

According to the example of Figs. 1 and 2 the main shaft 8 serves as input shaft of the ancillary gear 16. That means that the ancillary gear 16 is directly mechanically coupled to the main shaft 8 of wind turbines 2a, 2b.

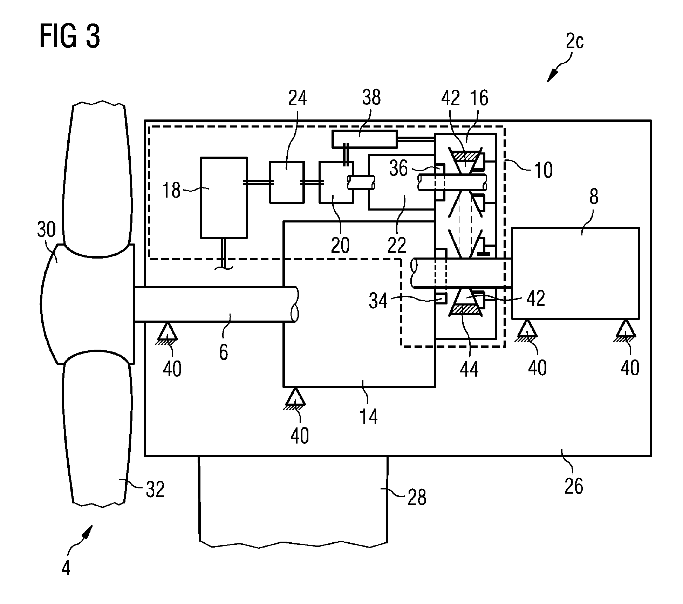

In contrast thereto according to the example of Fig. 3, the output shaft of the gear 14 serves as input shaft of the ancillary gear 16.

The ancillary gear 16 is mechanically coupled to, for example, four flywheels 22 for storing mechanical energy of the main shaft 8 arranged in a quadruple to avoid dynamic effects. Such a flywheel 22 is made of thin sheets. A clutch (not shown) is provided for coupling the flywheels 22 mechanically to the main shaft 8 and decoupling when rotational energy of the main shaft 8 is to be recovered or to the output shaft of the gear 14 when mechanical energy should be stored in a battery 18.

Mechanically coupled with the flywheels 22 is the ancillary generator 20 for transforming the stored mechanical energy by the flywheels 22 into electrical energy. Electrically connected with the ancillary generator 20 is the AC/DC converter 24 for converting the electrical energy which is stored in the battery 18 which is therefore electrically connected with the AC/DC converter 24. The stored electrical energy can be supplied to other electrical device, like lights, a crane or electric subsystems (not shown) of the wind turbine 2a, 2b, 2c when necessary.

A control unit (not shown) of the wind turbine 2a, 2b, 2c engages the ancillary generator 20 only if the wind turbine 2a, 2b, 2c is braking by amending the transmission ratio of the ancillary gear 16, for example by means of a clutch (not shown). In this case the ancillary generator 20 does not reduce the output power of the generator 8. Further, the control unit continuously controls the terminal voltage of the generator 8.

The battery 18 will be loaded as long as the battery voltage is lower than the terminal voltage of the ancillary generator 20. The control unit stops loading when the battery voltage has achieved the level of terminal voltage of the ancillary generator 20. Therefore an intelligent battery sensor (not shown) is provided measuring the voltage, temperature and malfunctions of the battery 18 and sending it to the control unit.

A conventional fixing brake (not shown) will secure the rotor 4 when a braking manoeuvre is complete, e.g. the rotor 4 is no longer rotating or has almost stopped rotating. Alternatively such a conventional, fixing brake and the kinetic energy device 10 collectively breaks the main shaft 8.

For the sake of clarity, it is to be understood that the use of "a" or "an" throughout this application does not exclude a plurality, and "comprising" does not exclude other steps or elements.

## Claims

1. A wind turbine comprising a rotor (4) and a main shaft(6), wherein the main shaft (6) is coupled to the rotor (4) to transforming wind energy into kinetic energy of rotation of the main shaft (6), and wherein the main shaft (6) is mechanically coupled to a main generator (8) of the wind turbine (2), wherein the main generator (8) is realised to transform kinetic energy of rotation into electrical energy,
**characterized by**
a brake system comprising an energy recovery arrangement realised to recover at least part of the kinetic energy of the rotation of the main shaft (6) when the rotational speed of the rotor (4) is reduced by the brake system.

2. A wind turbine according to claim 1, wherein the brake system comprises a kinetic energy storage device (10) realised for store the recovered kinetic energy.

3. A wind turbine according to claim 2, wherein the kinetic energy storage device (10) comprises at least one flywheel (22) mechanically coupled to the said main shaft (6).

4. A wind turbine according to claim 3, comprising an ancillary generator (20) mechanically coupled to the flywheel (22).

5. A wind turbine according to claim 4, comprising an electrical energy storage device (12) electrically coupled to the ancillary generator (20).

6. A wind turbine according to claims 5, comprising an AC/DC converter (24) realised to convert electrical energy generated by the ancillary generator (20) into a DC voltage.

7. A wind turbine according to claim 6, comprising a battery (18) realised to store electrical energy.

8. A wind turbine according to any of claims 1 or 7, comprising an ancillary gear (16) with an input shaft and an output shaft, whereby the input shaft is directly mechanically coupled to the main shaft (6).

9. A wind turbine according to claim 8, wherein the ancillary gear (16) is a gearbox comprises a continuously variable transmission ratio between the input shaft and the output shaft.

10. A wind turbine according to any of the claims 2 to 9, comprising a clutch realised to coupling and decoupling the kinetic energy storing device (10).

11. A wind turbine according to any of the claims 1 to 10, wherein the main shaft (6) is directly mechanically coupled to the main generator (8).

12. A wind turbine according to claim 11, wherein the kinetic energy storage device (10) is directly mechanically coupled to the main shaft (6).

13. A wind turbine according to one of the claims 1 to 9, comprising a gear (14) with an input shaft and an output shaft, whereby said input shaft is mechanically coupled to the main shaft (6) and said output shaft is directly mechanically coupled to the main generator (8).

14. A wind turbine according to claim 13, wherein the kinetic energy storage device (10) is mechanically coupled to the output shaft of said gear (14).

15. A method of controlling a wind turbine comprising a rotor (4) and a main shaft (6), wherein the main shaft (6) is coupled to the rotor (4) to transform wind energy into kinetic energy of rotation of the main shaft (6), and wherein the main shaft (6) is mechanically coupled to a main generator (8) of the wind turbine (2), wherein the main generator (8) is realised to transform kinetic energy of rotation into electrical energy,
**characterized by**
storing at least part of the kinetic energy which is recovered when the rotational speed of the rotor (4) is reduced by the brake system.

## Amended claims

### Amended claims in accordance with Rule 137(2) EPC.

**1.** A wind turbine comprising a rotor (4) and a main shaft(6), wherein the main shaft (6) is coupled to the rotor (4) to transforming wind energy into kinetic energy of rotation of the main shaft (6), and wherein the main shaft (6) is mechanically coupled to a main generator (8) of the wind turbine (2), wherein the main generator (8) is realised to transform kinetic energy of rotation into electrical energy,
**characterized by**
a brake system comprising an energy recovery arrangement realised to recover at least part of the kinetic energy of the rotation of the main shaft (6) when the rotational speed of the rotor (4) is reduced by the brake system, wherein the brake system comprises a kinetic energy storage device (10) realised for storing the recovered kinetic energy, which kinetic energy storage device (10) comprises at least one flywheel (22) mechanically coupled to the main shaft (6).

**2.** A wind turbine according to claim 1, comprising an ancillary generator (20) mechanically coupled to the flywheel (22).

**3.** A wind turbine according to claim 2, comprising an electrical energy storage device (12) electrically coupled to the ancillary generator (20).

**4.** A wind turbine according to claim 3, comprising an AC/DC converter (24) realised to convert electrical energy generated by the ancillary generator (20) into a DC voltage.

**5.** A wind turbine according to claim 4, comprising a battery (18) realised to store electrical energy.

**6.** A wind turbine according to any of claims 1 or 5, comprising an ancillary gear (16) with an input shaft and an output shaft, whereby the input shaft is directly mechanically coupled to the main shaft (6).

**7.** A wind turbine according to claim 6, wherein the ancillary gear (16) is a gearbox comprises a continuously variable transmission ratio between the input shaft and the output shaft.

**8.** A wind turbine according to any of the preceding claims, comprising a clutch realised to coupling and decoupling the kinetic energy storing device (10).

**9.** A wind turbine according to any of the preceding claims, wherein the main shaft (6) is directly mechanically coupled to the main generator (8).

**10.** A wind turbine according to claim 9, wherein the kinetic energy storage device (10) is directly mechanically coupled to the main shaft (6).

**11.** A wind turbine according to one of the claims 1 to 7, comprising a gear (14) with an input shaft and an output shaft, whereby said input shaft is mechanically coupled to the main shaft (6) and said output shaft is directly mechanically coupled to the main generator (8).

**12.** A wind turbine according to claim 11, wherein the kinetic energy storage device (10) is mechanically coupled to the output shaft of said gear (14).

**13.** A method of controlling a wind turbine comprising a rotor (4) and a main shaft (6), wherein the main shaft (6) is coupled to the rotor (4) to transform wind energy into kinetic energy of rotation of the main shaft (6), and wherein the main shaft (6) is mechanically coupled to a main generator (8) of the wind turbine (2), wherein the main generator (8) is realised to transform kinetic energy of rotation into electrical energy,
**characterized by**
recovering, in an energy recovery arrangement of a brake system, at least part of the kinetic energy of the rotation of the main shaft (6) when the rotational speed of the rotor (4) is reduced by the brake system; and
storing, in a kinetic energy storage device (10) of the brake system, comprising at least one flywheel (22) mechanically coupled to the main shaft (6), at least part of the recovered kinetic energy.
